# EUROPÄISCHE PATENTSCHRIFT

(11) **EP 0 436 765 B1**
(45) Veröffentlichungstag und Bekanntmachung des Hinweises auf die Patenterteilung: **23.03.1994**
(21) Anmeldenummer: 90100647.8
(22) Anmeldetag: 12.01.1990
(51) Int. Cl.: H04N 5/32, A61B 6/03

(54) **Röntgendiagnostikeinrichtung**
X-Ray diagnosis apparatus
Appareil diagnostique à rayons X

(43) Veröffentlichungstag der Anmeldung: 17.07.1991
(73) Patentinhaber: SIEMENS AKTIENGESELLSCHAFT, 80333 München (DE)
(72) Erfinder: Pfeiler, Manfred, Dr.-Ing., D-8520 Erlangen (DE); Hofmann, Fritz-Walter, Dr. (Ph. D.), D-8520 Buckenhof (DE); Knüpfer, Wolfgang, Dr., D-8520 Erlangen (DE)

(56) Entgegenhaltungen:
- DE-A- 3 503 698
- US-A- 4 628 356

## Beschreibung

Es ist ein Festkörperbildwandler für die Anfertigung röntgenologischer Bilder bekannt, der eine Schicht aufweist, deren elektrischer Widerstand von der Intensität der auftreffenden Strahlung abhängt und mit der eine elektrolumineszente Schicht in Kontakt steht, die den jeweiligen Widerstand in einen entsprechenden Helligkeitswert umwandelt. Zwischen den einander abgewandten Seiten dieser beiden Schichten liegt eine hochfrequente Wechselspannung, die die elektrolumineszente Schicht in Abhängigkeit von der jeweils auftreffenden Strahlenintensität zum Leuchten bringt.

Ein Festkörperbildwandler dieser Art hat sich in der medizinischen Radiologie bis jetzt nicht durchsetzen können, da die elektrolumineszente Schicht eine relativ hohe zeitliche Trägheit aufweist, die ihn für die Betrachtung von bewegten Bildern ungeeignet macht.

Der Erfindung liegt die Erkenntnis zugrunde, daß die durch die zeitliche Trägheit der elektrolumineszenten Schicht bedingte lange Abklingzeit des elektrolumineszenten Bildes von vielen Sekunden bis Minuten benutzt werden kann, um ein röntgenologisch erzeugtes Einzelbild während dieser Abklingzeit zu speichern.

Ausgehend von dieser Erkenntnis liegt der Erfindung die Aufgabe zugrunde, das Speichervermögen eines Festkörperbildwandlers zur Digitalisierung eines damit erzeugten Bildes heranzuziehen.

Diese Aufgabe ist bei einer Röntgendiagnostikeinrichtung mit einem Festkörperbildwandler der eingangs beschriebenen Art dadurch gelöst, daß eine Abtastvorrichtung vorhanden ist, durch die die Helligkeit der Bildpunkte der elektrolumineszenten Schicht in entsprechende elektrische Signale umgewandelt wird, welche einem Datenerfassungs- und Datenverarbeitungssystem zugeführt werden. Das elektrische Ausgangssignal eines Lichtdetektors der Abtastvorrichtung entspricht dabei der jeweiligen Helligkeit der einzelnen Bildpunkte und kann zur Bilddarstellung auf einem Monitor weiter verarbeitet werden. Das Bild auf dem Monitor kann dabei später als das elektrolumineszente Bild erzeugt werden.

Die Erfindung ist nachfolgend anhand von in der Zeichnung dargestellten Ausführungsbeispielen näher erläutert. Es zeigen:
- Fig. 1: eine Röntgendiagnostikeinrichtung nach der Erfindung,
- Fig. 2: den Festkörperbildwandler der Röntgendiagnostikeinrichtung gemäß Fig. 1,
- Fig. 3 und 4: zwei andere Ausführungsbeispiele einer Röntgendiagnostikeinrichtung nach der Erfindung, und
- Fig. 5: eine Variante des Festkörperbildwandlers gemäß Fig. 2.

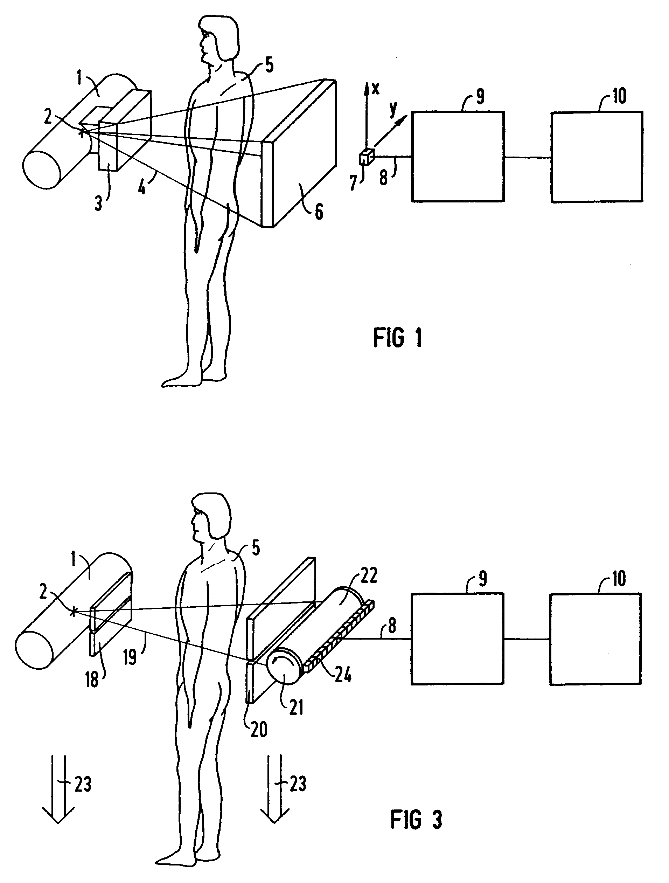

In der Fig. 1 ist ein Röntgenstrahler 1 dargestellt, von dessen Fokus 2 ein pyramidenförmiges, von einer Primärstrahlenblende 3 eingeblendetes Röntgenstrahlenbündel 4 ausgeht. Das Röntgenstrahlenbündel 4 durchsetzt einen Patienten 5 und trifft auf einem Festkörperbildwandler 6 auf. Der Festkörperbildwandler 6 speichert das Bild über viele Sekunden bis Minuten. Er wird dabei elektrisch zum Leuchten angeregt, wobei das gespeicherte Bild nicht gelöscht wird. Es wird gemäß Fig. 1 mit Hilfe eines Lichtdetektors 7, der mäanderförmig in x- und y-Richtung bewegt wird, abgetastet und in aufeinanderfolgende elektrische Signale auf der Leitung 8 umgewandelt. Die Signale auf der Leitung 8 werden einem Datenerfassungs- und Datenverarbeitungssystem 9 zugeführt, das das die Wiedergabe des ggf. bearbeiteten Bildes auf einem Monitor 10 bewirkt.

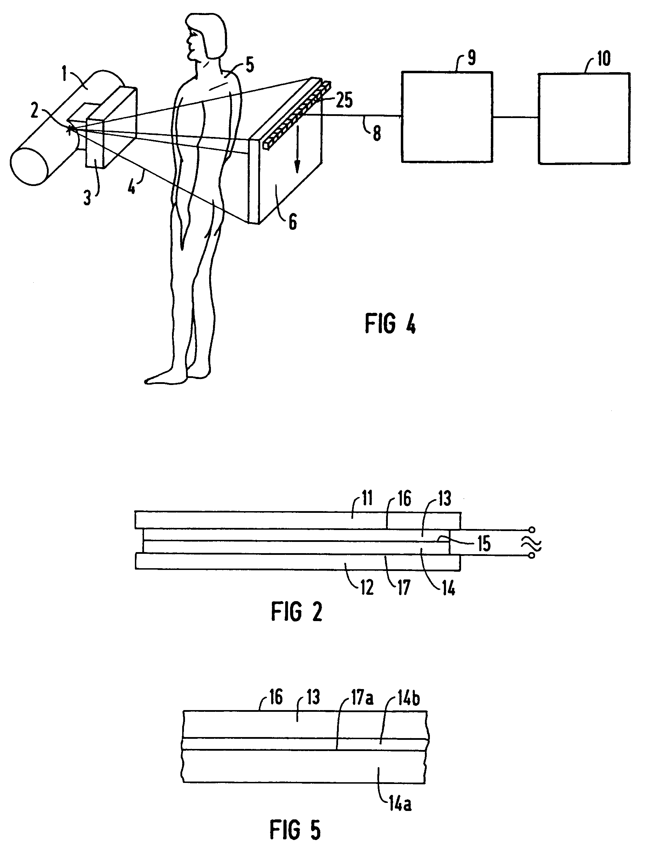

Die Fig. 2 zeigt, daß der Festkörperbildwandler 6 zwischen zwei Glasplatten 11, 12 eine elektrolumineszente Schicht 13 und eine Widerstandsschicht 14 aufweist. Zwischen den Schichten 13, 14 liegt eine Kopplungsschicht 15, zwischen der Glasplatte 11 und der elektrolumineszenten Schicht 13 eine transparente Elektrodenschicht 16 und zwischen der Glasplatte 12 und der Widerstandsschicht 14 eine transparente Elektrodenschicht 17.

An den Elektrodenschichten 16, 17 liegt eine hochfrequente elektrische Spannung. Diese bewirkt einen Stromfluß durch die elektrolumineszente Schicht 13, dessen Höhe vom Widerstand der Widerstandsschicht 14 abhängt. Dieser Widerstand wird durch die Intensität der jeweils auftreffenden Röntgenstrahlung bestimmt. Auf diese Weise stellt sich die Helligkeit der einzelnen Bildpunkte der elektrolumineszenten Schicht 13 jeweils in Abhängigkeit von dem Widerstand der Widerstandsschicht 14 und damit von der Intensität der auftreffenden Röntgenstrahlung ein. Die elektrolumineszente Schicht 13 gibt demgemäß ein Röntgenschattenbild des durchstrahlten Bereiches des Patienten 5 in Fig. 1 wieder.

Die elektrolumineszente Schicht 13 hat eine relativ lange Abklingzeit von vielen Sekunden bis Minuten, die es ermöglicht, ein Einzelbild über diese Zeit zu speichern. Das gespeicherte Einzelbild wird in der Fig. 1 bildpunktweise zerstörungsfrei ausgelesen. Diese Auslesung kann während der Abklingzeit vielfach wiederholt ablaufen. Dies kann bei niedrigen Bilddosen interessant sein, die zu kleinen Leuchtdichten führen; durch Mehrfachauslesen kann der Einfluß des Eigenrauschens des Lichtdetektors 7 und der nachgeschalteten Elektronik weitgehend reduziert werden. Summiert man nämlich vorzugsweise in digitaler Form die Auslesesignale in der richtigen örtlichen Zuordnung, so erhält man ein weitgehend rauschfreies Röntgenbild, dessen Rauscheigenschaften praktisch nur durch das unvermeidliche Quantenrauschen bestimmt sind.

Das Auslesen kann, wie in der Fig. 1 dargestellt, punktweise erfolgen. Es ist aber auch möglich, einen zeilenförmigen Lichtdetektor aus einer Reihe von Detektorelementen zu verwenden, so daß ein zeilenweises Auslesen ermöglicht ist. Ferner kann auch ein zweidimensional gerasteter, flächenhafter Lichtdetektor verwendet werden, bei dem eine Relativbewegung im Hinblick auf den Festkörperbildwandler nicht erforderlich ist.

Der Festkörperbildwandler kann eben oder gekrümmt sein.

Bei dem Beispiel gemäß Fig. 1 wird die Helligkeit jeweils eines Bildpunktes auf dem Festkörperbildwandler 6 durch den Lichtdetektor 7 erfaßt. Dieser kann, wie beschrieben, in x- und y-Richtung, aber auch nur in einer dieser Richtungen bewegt werden, wenn der Festkörperbildwandler 6 in der anderen Richtung bewegt wird. Die exakte Erfassung der Helligkeit jeweils eines Bildpunktes ist möglich, wenn Spaltblenden in x- und y-Richtung relativ zueinander und zu den Komponenten 6, 7 so bewegt werden, daß immer nur ein Bildpunkt vom Lichtdetektor 7 gesehen wird.

In der Fig. 3 ist dem Röntgenstrahler 1 eine schlitzförmige Primärstrahlenblende 18 für ein fächerförmiges Röntgenstrahlenbündel 19 zugeordnet. Nach dem Patienten 5 ist eine zweite Schlitzblende 20 vorgesehen. Das Röntgenstrahlenbündel 19 trifft, nachdem es den Patienten 5 durchsetzt hat, auf dem auf einer Trommel 21 angeordneten Festkörperbildwandler 22, der entsprechend der Fig. 2 ausgebildet ist, auf. Die elektrische Spannung wird dem Festkörperbildwandler 22 hierzu über nicht dargestellte rotierende Stromkopplungen zugeführt.

Zur Aufnahme eines Bildes werden der Röntgenstrahler 1 mit der Primärstrahlenblende 18 sowie die Trommel 21 mit dem Festkörperbildwandler 22 und die Schlitzblende 20 in Richtung der Pfeile 23 bewegt. Dabei wird die Trommel 21 gedreht. Auf diese Weise wird auf dem Festkörperbildwandler 22 das Bild des untersuchten Bereiches des Patienten 5 zeilenweise aufgezeichnet. Die Streustrahlung wird dabei unterdrückt.

Zum Auslesen des auf dem Festkörperbildwandler 22 aufgezeichneten Bildes wird dieser an einem zeilenförmigen Lichtdetektor 24 aus einer Reihe von Detektorelementen vorbeigedreht. Die Ausgangssignale der Detektorelemente werden wieder dem Datenerfassungs-und Datenverarbeitungssystem 9 zugeführt.

Die Fig. 4 zeigt eine Ausführungsform, bei der die Komponenten 1 bis 6 den Komponenten 1 bis 6 der Fig. 1 entsprechen. Das Bild des Festkörperbildwandlers 6 wird im Gegensatz zur Fig. 1 durch einen zeilenförmigen Lichtdetektor 25 aus einer Reihe von Detektorelementen ausgelesen, der beim Auslesevorgang senkrecht zur Zeilenrichtung im Sinne einer zeilenweisen Bildabtastung am Festkörperbildwandler 6 vorbeigeführt wird.

Der Festkörperbildwandler 6 und die Trommel 21 mit dem Festkörperbildwandler 22 können für die Auslesung aus der Aufnahmeposition entfernt und in eine Abtastposition gebracht werden.

Wird ein flächenhafter, d.h. zweidimensional gerasteter Lichtdetektor verwendet, so ist, wie oben erläutert, keine Relativbewegung zwischen diesem Lichtdetektor und dem Festkörperbildwandler mehr erforderlich. Die Detektorelemente eines solchen Lichtdetektors können so kleinflächig sein, daß eine Verkleinerung des Bildes des Festkörperbildwandlers erforderlich ist. Die optische Ankopplung der einzelnen Detektorelemente kann dabei mit Hilfe einer Faseroptik erfolgen.

Beim Auslesen des röntgenologisch erzeugten Bildes im Festkörperbildwandler 6, 22 wird dieses nicht automatisch gelöscht. Die Löschung kann durch ein entsprechend gepoltes elektrisches Gleichfeld an den Elektroden 16, 17 in Fig. 2 erfolgen.

Die Repitionszeit zwischen aufeinander folgenden Aufnahmen kann z.B. zwischen 10 und 20 Sekunden betragen. Während dieses Zeitraumes sollte das ggf. mehrfache optische Auslesen abgeschlossen sein und die erforderliche Nachverarbeitung der dadurch erzeugten Signale erfolgen.

Eine Röntgendiagnostikeinrichtung nach der Erfindung mit einem optisch abgetasteten Festkörperbildwandler zur Erzeugung eines digitalen Röntgenbildes ist eine Alternative zur andersartigen und z.B. bauvolumenaufwendigen Verwendung von Speicherleuchtstoffen für die vorübergehende Röntgenbildspeicherung, bei denen das Auslesen durch Abtasten mit Laserlicht erfolgt, oder zu einer Röntgendiagnostikeinrichtung mit einer Ladungsspeicherschicht, z.B. aus Selen, bei der eine dem Röntgenbild entsprechende Ladungsverteilung abgetastet wird.

Durch Variation der die Elektrolumineszenz auslösenden Wechselspannung an den Elektroden 16, 17 (Fig. 2) nach Höhe und Frequenz kann die Leuchtdichte und ggf. ihre Verteilung und somit der Dynamikbereich der Röntgenaufnahme beeinflußt werden.

Die elektrolumineszente Schicht 13 kann im Gegensatz zum polykristallinen Charakter der Leuchtstoffe bei allen Foliensystemen, also auch bei den Speicherleuchtstoffolien, kornfrei, d.h. amorph, aufgebracht werden. Dadurch wird die Bildauflösung gegenüber diesen Folien verbessert.

Zusätzlich zu der Abtastung des Bildes des Festkörperbildwandlers 6, 22 kann auch eine Kontaktaufnahme durch unmittelbare Belichtung durchgeführt werden.

Wird die Repititionsrate zwischen aufeinanderfolgenden Aufnahmen auf etwa 1 Hz gesteigert, so ist mit der erfindungsgemäßen Röntgendiagnostikeinrichtung eine digital gepulste Durchleuchtung möglich.

Materialien für die elektrolumineszente Schicht 13 und die Leitschicht 14 sind bekannt. So kann die elektrolumineszente Schicht 13 z.B. aus ZnS und die Widerstandsschicht 14 aus CdS bestehen.

Als weitere Materialien für die Widerstandsschicht 14 bieten sich CdSe, HgJ₂ und PbO an, die eine gegenüber CdS höhere Röntgenabsorption aufweisen. Dieser Vorteil läßt geringere Schichtdicken zu und führt weiter zu einer Verbesserung der Ortsschärfe.

Im Gegensatz zu polykristallinen Leitschichten kann auch HgJ₂ z.B. durch dynamische Sublimationstechnik (M.A. Hassan, S. Pearce, J.P.N. Edwards, Journal of Crystal Growth 44 (1978) Seiten 473 bis 474) und PbO₂ durch Aufdampfen (F.J. du Chatenier, J. van den Broek, Philips Res. Repts 24 (1969) Seiten 392 bis 406) aufgetragen werden.

Der Festkörperbildwandler 6 kann mit einem höheren Quantenwirkungsgrad betrieben werden, indem ein Aufbau gemäß Fig. 5 vorgesehen wird. Hier ist eine lumineszierende, röntgenempfindliche Schicht 14a mit einer Dicke von 100 µm - 300 µm vorgesehen, die entweder aufgedampft wird, z.B. CsJ:Na, oder feinkörnigen polykristallinen Charakter aufweist, z.B. Gd₂O₂S:Tb. Die in dieser Schicht 14a absorbierte Röntgenstrahlung wird in sichtbares Licht konvertiert, wobei für CsJ:Na das Emissionsmaximum bei 420 nm, für Gd₂O₂S:Tb bei 545 nm liegt.

Dieses Licht steuert die Widerstandsschicht 14b, die aus einer dünnen (10 µm - 100 µm) aufgedampften Schicht aus PbO oder auch GaAs bestehen kann. Diese Anordnung bestehend aus der Schicht 14a, der transparenten Elektrodenschicht 17a und der Widerstandsschicht 14b für den Festkörperbildwandler zeichnet sich durch einen hohen Quantenwirkungsgrad bei gleichzeitig stark verbesserter Ortsschärfe aus. Somit kann das Quantenrauschen der Bilder weiter reduziert werden.

## Patentansprüche

1. Röntgendiagnostikeinrichtung mit einem Festkörperbildwandler (6, 22), der eine Widerstandsschicht (14, 14b), deren elektrischer Widerstand von der Intensität der auftreffenden Röntgenstrahlung (4, 19) abhängt, und eine damit in Kontakt stehende elektrolumineszente Schicht (13), die den jeweiligen Widerstand in einen entsprechenden Helligkeitswert umwandelt, enthält, sowie mit einer Abtastvorrichtung (7, 21, 24, 25) zum Umwandeln der Helligkeit der Bildpunkte der elektrolumineszenten Schicht (13) in entsprechende elektrische Signale, welche einem Datenerfassungs- und Datenverarbeitungssystem (9) zugeführt werden.

2. Röntgendiagnostikeinrichtung nach Anspruch 1, bei dem die Abtastvorrichtung einen Lichtdetektor (7) zur Erfassung der Helligkeit eines einzelnen Bildpunktes und eine Einrichtung zur Erzeugung einer Relativbewegung zwischen dem Festkörperbildwandler (6) und dem Lichtdetektor (7) im Sinne einer punktweisen Bildabtastung aufweist.

3. Röntgendiagnostikeinrichtung nach Anspruch 1, bei dem die Abtastvorrichtung einen zeilenförmigen Lichtdetektor (24, 25) aus einer Reihe von Detektorelementen zur Erfassung der Helligkeit der Bildpunkte einer Bildzeile und eine Einrichtung zur Erzeugung einer Relativbewegung zwischen dem Festkörperbildwandler (6, 22) und dem Lichtdetektor (24, 25) senkrecht zur Zeilenrichtung im Sinne einer zeilenweisen Bildabtastung aufweist.

4. Röntgendiagnostikeinrichtung nach einem der Ansprüche 1 bis 3, **dadurch gekennzeichnet,** daß die Abtastvorrichtung (7, 21, 24, 25) das im Festkörperbildwandler gespeicherte Bild mehrfach ausliest.

5. Röntgendiagnostikeinrichtung nach einem der Ansprüche 1 bis 4, **dadurch gekennzeichnet,** daß die Widerstandsschicht (14b) auf einer lumineszierenden, röntgenempfindlichen Schicht (14a) aufgebracht ist, wobei die Leitfähigkeit der Widerstandsschicht (14b) vom Licht der lumineszenten Schicht (14a) gesteuert wird.

## Claims

1. X-ray diagnostic device having a monolithic image sensor (6, 22) which contains a resistance layer (14, 14b), the electrical resistance of which depends on the intensity of the striking X-radiation (4, 19), and an electroluminescent layer (13) in contact therewith, which converts the respective resistance into an appropriate brightness value, and having a scanning device (7, 21, 24, 25) for converting the brightness of the image points of the electroluminescent layer (13) into appropriate electrical signals which are supplied to a data detection and data processing system (9).

2. X-ray diagnostic device according to claim 1, where the scanning device has a light detector (7) for detecting the brightness of a single image point and a device for generating a relative movement between the monolithic image sensor (6) and the light detector (7) in the sense of a pointwise image scanning.

3. X-ray diagnostic device according to claim 1, where the scanning device has a rectilinear light detector (24, 25) from a series of detector elements for detecting the brightness of the image points of an image line and a device for generating a relative movement between the monolithic image sensor (6, 22) and the light detector (24, 25) perpendicular to the line direction in the sense of a linear image scanning.

4. X-ray diagnostic device according to one of claims 1 to 3, characterized in that the scanning device (7, 21, 24, 25) repeatedly reads out the image stored in the monolithic image sensor.

5. X-ray diagnostic device according to one of claims 1 to 4, characterized in that the resistance layer (14b) is applied to a luminescing, X-ray sensitive layer (14a), whereby the conductivity of the resistance layer (14b) is controlled by the light of the luminescent layer (14a).

## Revendications

1. Appareil de radiodiagnostic comportant un convertisseur d'images monolithique (6,22), qui comporte une couche résistive (14,14b), dont la résistance électrique dépend de l'intensité du rayonnement X (4,19) incident, et une couche électroluminescente (13), qui est en contact avec la couche résistive et qui convertit la résistance respective en une valeur de luminosité correspondante, ainsi qu'un dispositif d'exploration (7,21,24,25) destiné à convertir la luminosité des points image de la couche électroluminescente (13) en des signaux électriques correspondants, qui sont envoyés à un système (9) d'acquisition et de traitement des données.

2. Appareil de radiodiagnostic suivant la revendication 1, dans lequel le dispositif d'exploration comporte un détecteur de lumière (7) destiné à détecter la luminosité d'un point image individuel et un dispositif de production d'un déplacement relatif entre le convertisseur d'images monolithique (6) et le détecteur de lumière (7), en vue d'une exploration point par point de l'image.

3. Appareil de radiodiagnostic suivant la revendication 1, dans lequel le dispositif d'exploration comporte un détecteur de lumière en forme de ligne (24,25) constitué d'une rangée d'éléments détecteurs destinée à détecter la luminosité des points image d'une ligne de l'image et d'un dispositif de production d'un déplacement relatif entre le convertisseur d'images monolithique (6,22) et le détecteur de lumière (24,25) perpendiculairement à la direction des lignes en vue d'une exploration ligne par ligne de l'image.

4. Appareil de radiodiagnostic suivant l'une des revendications 1 à 3, caractérisé par le fait que le dispositif d'exploration (7,21,24,25) lit plusieurs fois l'image mémorisée dans le convertisseur d'images monolithique.

5. Appareil de radiodiagnostic suivant l'une des revendications 1 à 4, caractérisé par le fait que la couche résistive (14b) est disposée sur une couche luminescente (14a) sensible aux rayons X, la conductivité de la couche résistive (14b) étant commandée par la lumière de la couche luminescente (14a).
